# EUROPÄISCHE PATENTSCHRIFT

(11) **EP 0 700 413 B1**
(45) Veröffentlichungstag und Bekanntmachung des Hinweises auf die Patenterteilung: **01.04.1998**
(21) Anmeldenummer: 94916977.5
(22) Anmeldetag: 20.05.1994
(51) Int. Cl.: C08J 9/12

(54) **UNTER VERWENDUNG HALOGENFREIER TREIBMITTEL HERGESTELLTE SCHAUMSTOFFPLATTEN**
CELLULAR-PLASTIC PANELS MANUFACTURED USING HALOGEN-FREE PROPELLANTS
PLAQUES DE MOUSSE FABRIQUEES AVEC UTILISATION D'AGENTS MOUSSANTS NON HALOGENES

(30) Priorität: 27.05.1993 DE 4317573; 01.02.1994 DE 4402909
(43) Veröffentlichungstag der Anmeldung: 13.03.1996
(73) Patentinhaber: BASF Aktiengesellschaft, 67063 Ludwigshafen (DE)
(72) Erfinder: CALLENS, Julien, N., R., B-2170 Merksem (BE); VAN BIESEN, Alfons, J., S., B-1745 Opwijk (BE); WOLFF, Bernardo, D-68163 Mannheim (DE); ALICKE, Gerhard, D-67549 Worms (DE); WEBER, Reinhold, D-67112 Mutterstadt (DE); DIETZEN, Franz-Josef, D-67071 Ludwigshafen (DE); HAHN, Klaus, D-67281 Kirchheim (DE)
(86) Internationale Anmeldenummer: EP9401631
(87) Internationale Veröffentlichungsnummer: WO9428058

(56) Entgegenhaltungen:
- EP-A- 0 218 098
- EP-A- 0 464 581
- US-A- 5 269 987

## Beschreibung

Die Erfindung betrifft unter Verwendung halogenfreier Treibmittel hergestellte Schaumstoffplatten und Verfahren zu ihrer Herstellung. Die Erfindung betrifft insbesondere solche Schaumstoffplatten, die eine Dicke von mindestens 20 mm aufweisen und eine Thermoplastmatrix auf Basis eines Styrolpolymerisats, sowie geschlossene Zellen, die frei von halogenhaltigen Gasen sind, enthalten.

Für die Herstellung von Schaumstoffplatten auf Basis von Styrolpolymerisaten durch Extrusion ist eine Vielzahl von Treibmitteln vorgeschlagen worden.

Beispielsweise ist aus der EP-A-464 581 ein Verfahren zur Herstellung von Schaumstoffplatten mit hoher Druckfestigkeit und einem Querschnitt von mindestens 50 cm² bekannt, bei dem ein Gemisch aus einem Styrolpolymerisat, 5 bis 16 Gew.-%, bezogen auf das Styrolpolymerisat, eines Treibmittels, sowie gegebenenfalls üblichen Zusatzstoffen, extrudiert wird, wobei als Treibmittel ein Gemisch verwendet wird, welches

| | | |
|---|---|---|
| a) | 3 bis 70 Gew.-% | eines Alkohols oder Ketons mit einen Siedepunkt zwischen 56 und 100°C, |
| b) | 5 bis 50 Gew.-% | Kohlendioxid und |
| c) | 0 bis 90 Gew.-% | eines gesättigten C₃- bis C₅-Kohlenwasserstoffs und/oder eines zwischen -30°C und +30°C siedenden, Wasserstoff enthaltenden Fluorchlor- oder Fluorkohlenwasserstoffs |

enthält.

Bei den nach den bekannten Verfahren hergestellten Schaumstoffplatten ist von Nachteil, daß sich die Endwerte beispielsweise für die Wärmeformbeständigkeit relativ langsam einstellen.

Aus der JP-A-60/145 835 ist die Herstellung einer Laminatplatte mit einer Polystyrolschaumstoffschicht bekannt, wobei die Polystyrolschaumstoffschicht durch Extrusion unter Verwendung eines Ethers, wie Dimethylether, Methylethylether oder Methylvinylether, als Treibmittel hergestellt wurde. Im Beispiel ist die Herstellung einer 6 mm dicken Platte unter Verwendung von 3,7 Gewichtsteilen Dimethylether, bezogen auf Polystyrol, als Treibmittel beschrieben.

Es ist außerdem bekannt, daß bei Verwendung von schnell aus dem Schaum diffundierenden Treibmitteln, z.B. CO₂, eine ausreichende Dimensionsstabilität und Druckfestigkeit von Schaumstoffplatten mit einer Plattendicke von 20 mm oder mehr, insbesondere gleich oder größer 50 mm, häufig nicht mehr gewährleistet ist. Darüber hinaus werden bei Verwendung von Treibmitteln mit hoher Triebkraft häufig Schaumstoffe mit hohem Anteil an offenen Zellen erhalten.

So ist bei dem Verfahren gemäß der EP-A-464 581 die Herstellung von qualitativ hochwertigen Schaumstoffplatten einer Dicke von 20 mm oder darüber häufig nur bei Mitverwendung von Fluorchlor- oder Fluorkohlenwasserstoffen als Treibmittel möglich. Letztere sind aber aus Umweltschutzgründen unerwünscht.

Die deutsche Patentanmeldung P 42 36 579.1 betrifft ein Verfahren zur Herstellung von Polystyrol-Schaumstoffplatten, wobei ein Treibmittelgemisch eingesetzt wird, welches einen Dialkylether enthält. In den Beispielen ist die Thermoplastmatrix stets ein Homopolystyrol mit einem Schmelzindex von 4,5. Die Vicat-Erweichungstemperatur von Polystyrol beträgt 101°C.

Die Aufgabe der Erfindung bestand darin, unter Verwendung halogenfreier Treibmittel hergestellte extrudierte Schaumstoffplatten auf der Basis von Styrolpolymerisaten bereitzustellen.

Aufgabe der Erfindung war außerdem, ein Verfahren zur Herstellung von Schaumstoffplatten aus Styrolpolymerisaten mit einer Mindestdicke von 20 mm aufzuzeigen, das zu Schaumstoffen mit geschlossenen Zellen führt, die nur ein geringes Wasseraufnahmevermögen besitzen und neben guter Dimensionsstabilität und Druckfestigkeit eine hohe Wärmeformbeständigkeit aufweisen. Weiterhin war es Aufgabe der Erfindung, ein Verfahren bereitzustellen, welches die rasche Einstellung der Endwerte insbesondere für die Wärmeformbeständigkeit in den hergestellten Schaumstoffplatten ermöglicht. Der Anteil an Kohlendioxid im Treibmittel sollte möglichst groß sein können.

Ein weiteres Ziel der Erfindung war die Herstellung von Schaumstoffplatten einer Dicke von mehr als 50 mm, vorzugsweise von 80 bis 200 mm bei Verwendung von Treibmittelgemischen aus Ethanol und Kohlendioxid und insbesondere von Kohlendioxid als alleinigem Treibmittel.

Gegenstand der Erfindung sind unter Verwendung halogenfreier Treibmittel hergestellte, extrudierte Schaumstoffplatten mit einer Mindestdicke von 20 mm und einem Querschnitt von mindestens 50 cm², enthaltend eine Thermoplastmatrix auf Basis eines Styrolpolymerisats, geschlossene Zellen, die frei von halogenhaltigen Gasen sind, sowie gegebenenfalls in der Thermoplastmatrix unlösliche Zusatzstoffe, wobei die Thermoplastmatrix eine Vicat-Erweichungstemperatur VST B 50 (nach DIN 53 460) von höchstens 100°C und einem Schmelzindex MVR 200/5 (nach DIN 53 735) von mindestens 5 ml/10 min aufweist.

Ein weiterer Gegenstand der Erfindung ist Verfahren zur Herstellung solcher Schaumstoffplatten durch Extrusion eines Gemisches der plastifizierten Styrolpolymerisat-Thermoplastmatrix, eines halogenfreien Treibmittels sowie gegebenenfalls üblicher Zusatzstoffe.

Der Kern der Erfindung besteht darin, daß man von einer Thermoplastmatrix ausgeht, die eine Vicat-Erweichungstemperatur VST B 50 von höchstens 100, vorzugsweise von höchstens 99 und insbesondere von höchstens 95°C, sowie einen Schmelzindex MVR 200/5 von mindestens 5, vorzugsweise mindestens 7 und insbesondere mindestens 10 ml/10 min, aufweist. Die erfindungsgemäß hergestellten Schaumstoffplatten sind mindestens 20 mm dick, vorzugsweise mehr als 50 mm und insbesondere 80 bis 200 mm. Der Querschnitt beträgt mindestens 50 cm², vorzugsweise 100 bis 1200 cm². Sie sind geschlossenzellig, d.h., mehr als 90 %, vorzugsweise mehr als 95 % der Zellen sind geschlossen, was eine geringe Wasseraufnahme zur Folge hat. Die Dichte der Schaumstoffplatten beträgt vorzugsweise 20 bis 60 g·l⁻¹.

Ausgehend von Homopolystyrol ist die Erniedrigung der Vicat-erweichungstemperatur und Erhöhung des Schmelzindex grundsätzlich auf zwei Wegen möglich: Einmal durch Einbau von Comonomeren in die Polystyrolkette bzw. Abmischung von Homopolystyrol mit entsprechenden Copolymerisaten; zum andern durch Zumischen eines löslichen Weichmachers zu Polystyrol.

Eine besonders bevorzugte Thermoplastmatrix besteht aus einer Mischung von

| | | |
|---|---|---|
| a) | 0,1 bis 100 Gew.-% | eines Blockcopolymerisats aus 50 bis 99 Gew.-% und 1 bis 50 Gew.-% konjugierten Dienen, und |
| b) | 0 bis 99,9 Gew.-% | eines von a) verschiedenen Styrolpolymerisats. |

Die Thermoplastmatrix enthält als Komponente a) 0,1 bis 100 Gew.-%, vorzugsweise 1 bis 50 Gew.-% und besonders bevorzugt 5 bis 40 Gew.-% eines Blockcopolymerisats aus 50 bis 99 Gew.-%, vorzugsweise 55 bis 90 Gew.-% und besonders bevorzugt 60 bis 85 Gew.-% Styrol einerseits und 1 bis 50 Gew.-%, vorzugsweise 10 bis 45 Gew.-%, besonders bevorzugt 15 bis 40 Gew.-% an konjugierten Dienen andererseits. Besonders bevorzugt wird als Blockcopolymerisat a) ein sternförmig verzweigtes Blockcopolymerisat eingesetzt.

Als konjugierte Diene werden im allgemeinen solche mit 4 bis 8 Kohlenstoffatomen eingesetzt. Beispiele für konjugierte Diene, die allein oder in Mischung miteinander für die Herstellung der verzweigten Blockcopolymerisate herangezogen werden können, sind Butadien, Isopren sowie 2,3-Dimethyl-butadien. Besonders günstig sind dabei Butadien oder Isopren, wobei wiederum Butadien bevorzugt wird.

Das Molekulargewicht der sternförmig verzweigten Blockcopolymerisate liegt dabei in der Regel im Bereich von 50 000 bis 1 000 000 und beträgt vorzugsweise 100 000 bis 500 000. Bei diesen Angaben handelt es sich um das Gewichtsmittel des Molekulargewichts, bestimmt durch Viskositätsmessungen in 0,5 gew.-%iger Toluol-Lösung bei 25°C.

Die als Komponente a) erfindungsgemäß besonders bevorzugt einzusetzenden sternförmig verzweigten Blockcopolymerisate bestehen in ihren Verzweigungen aus Copolymerisatblöcken, in denen das Styrol und das konjugierte Dien blockförmig unter Bildung einzelner Polymersegmente eingebaut sind. Diese blockförmig aufgebauten Copolymerisatblöcke, die die Verzweigungen bilden, sind dabei über ein Kupplungsmittel chemisch miteinander verknüpft. Die sternförmig verzweigten Blockcopolymerisate besitzen mindestens 3, im allgemeinen 3 bis 10, und vorzugsweise 3 oder 4 solcher Verzweigungen, wobei diese Verzweigungen bevorzugt aus mindestens zwei Arten von Copolymerisatblöcken bestehen, die einen im Durchschnitt unterschiedlichen Aufbau haben. Weiterhin sind im allgemeinen mindestens 50 Gew.-%, vorzugsweise mindestens 60 Gew.-% der insgesamt in dem sternförmig verzweigten Blockcopolymerisat einpolymerisierten Styrols in einem oder mehreren der Copolymerisatblöcke der Verzweigungen als endständiges Homopolymersegment eingebaut.

Weitere Details zu den an sich bekannten sternförmig verzweigten Blockcopolymerisaten a) sind beispielsweise in der EP-B-0 088 960 und der EP-B-0 113 099 zu finden.

Die erfindungsgemäße Thermoplastmatrix kann aber auch ein Copolymeres des Styrols mit statistischer Verteilung der Comonomeren sein, bzw. eine Abmischung von Homopolystyrol mit einem derartigen Copolymeren. Geeignete Copolymere sind z.B. solche mit 1 bis 30, vorzugsweise 2 bis 10 Gew.-% eines (Meth-)Acrylsäureesters, vorzugsweise mit einem C₄-C₂₀-Alkohol.

Andere bevorzugte Thermoplastmatrices sind Mischungen von Styrolpolymerisaten, vorzugsweise Homopolystyrol, mit Weichmachern, die im Polystyrol löslich sind. Besonders bevorzugt sind Mischungen aus Polystyrol mit 0,1 bis 10, vorzugsweise 0,5 bis 6 Gew.-% eines flüssigen, aliphatischen und/oder cycloaliphatischen Kohlenwasserstoffs, eines organischen Esters, Ethers, Säureamids oder Polyethers. Geeignet sind z.B. technisches Weißöl (C₂₈-C₄₃-Paraffin), Ester von C₄-C₂₀-Monoalkoholen, Diolen oder des Glycerins mit höheren Fettsäuren, z.B. Adipinsäure, Phthalsäure, Stearinsäure und Zitronensäure, ferner Stearinsäureamide, Alkylether von Diethylen- und Dipropylenglykol sowie Polyalkylenoxide. Bei Verwendung solcher Thermoplastmatrices gelingt es, auch mit Treibmittelgemischen Ethanol/Kohlendioxid und sogar mit Kohlendioxid allein Schaumstoffplatten einer Dicke von mehr als 50 mm, vorzugsweise mehr als 80 mm und sogar mehr als 100 mm herzustellen.

Die Herstellung der Schaumstoffplatten erfolgt erfindungsgemäß in an sich bekannter Weise durch Extrusion. In einem Extruder wird die durch Erwärmen plastifizierte Thermoplastmatrix mit dem Treibmittel oder Treibmittelgemisch und gegebenenfalls weiteren Zusatzstoffen innig vermischt. Das Gemisch durchläuft sodann eine Beruhigungszone, in der es unter ständigem Rühren auf eine Temperatur zwischen etwa 100 und 120°C gekühlt und anschließend durch eine Düse zu Platten extrudiert wird.

Als übliche Zusatz- und/oder Hilfsstoffe können der Thermoplastmatrix Antistatika, Stabilisatoren, Farbstoffe, Füllstoffe, Flammschutzmittel und/oder Keimbildner in üblichen Mengen zugesetzt werden.

Beim erfindungsgemäßen Verfahren wird das Treibmittel oder Treibmittel-Gemisch in einer Menge von 1 bis 15 Gew.-%, vorzugsweise 3 bis 11 Gew.-%, insbesondere 4 bis 8 Gew.-%, bezogen auf die Thermoplastmatrix, verwendet. Die Treibmittel sind halogenfreie, flüchtige Substanzen.

Bevorzugt ist eine Treibmittelmischung aus

| | | |
|---|---|---|
| a) | 1 bis 100 Gew.-% | Kohlendioxid, |
| b) | bis zu 95 Gew.-% | eines Ethers aus der Gruppe Dimethylether, Methylethylether und Methylvinylether, |
| c) | bis zu 60 Gew.-% | eines Alkohols oder Ketons mit einem Siedepunkt zwischen 56 und 100°C, und |
| d) | bis zu 30 Gew.-% | eines aliphatischen C₃-C₆-Kohlenwasserstoffs. |

Eine besonders bevorzugte Treibmittelmischung zum Verschäumen von Thermoplastmatrices aus Polystyrol und löslichen Weichmachern sind Mischungen aus
a) 20 bis 95, vorzugsweise 75 bis 25 Gew.-% Kohlendioxid,
c) 80 bis 5, vorzugsweise 50-25 Gew.-% Ethanol
d) 0 bis 10 Gew.-% eines aliphatischen C₃-C₆-Kohlenwasserstoffs.

Bei Thermoplastmatrices aus Styrolcopolymerisaten, insbesondere sternförmig verzweigten Styrol/Butadien-Blockcopolymerisaten bzw. deren Abmischungen mit Homopolystyrol sind Treibmittelmischungen folgender Zusammensetzung bevorzugt:

| | | |
|---|---|---|
| a) | 2 bis 90 Gew.-% | Kohlendioxid, |
| b) | 1 bis 30 Gew.-% | Dimethylether, |
| c) | 0 bis 60 Gew.-% | Ethanol, und |
| d) | bis zu 10 Gew.-% | eines aliphatischen C₃-C₆-Kohlenwasserstoffs. |

Die Erfindung hat zahlreiche Vorteile. Die erfindungsgemäßen Schaumstoffplatten können unter Verwendung von halogenfreien Treibmittelgemischen hergestellt werden, wobei der Anteil an Kohlendioxid im Treibmittelgemisch hoch sein kann. Durch das erfindungsgemäße Verfahren können auf einfache und wirtschaftliche Weise dicke Schaumstoffplatten erhalten werden, aus denen das Treibmittel rasch entweicht, ohne daß die Druckfestigkeit herabgesetzt wird. Die nach dem erfindungsgemäßen Verfahren hergestellten Schaumstoffplatten erreichen bereits nach kurzer Ablagerungszeit die Endwerte für die Druckfestigkeit und Wärmeformbeständigkeit.

Es können umweltfreundliche Treibmittel angewandt werden, die bereits in der Natur vorhanden sind oder wie Dimethylether sehr rasch abgebaut werden. Dimethylether wird in der Luft mit einer Halbwertszeit von einigen Tagen abgebaut und reichert sich somit nicht in der Atmosphäre an.

Die in den Beispielen genannten Teile und Prozente beziehen sich auf das Gewicht.

### Beispiele 1 und 2

91 Teile Polystyrol mit einer Erweichungstemperatur von 101°C und einem Schmelzindex von 4,5 ml/10 min und 9 Teile eines sternförmig verzweigten Styrol-Butadien-Blockcopolymerisats mit einem Butadiengehalt von 24 % (Styrolux® KR 2688 der BASF Aktiengesellschaft) wurden einem Extruder mit einem Schneckendurchmesser von 120 mm kontinuierlich zugeführt und vermischt. Die Mischung hat eine Erweichungstemperatur VST B 50 von 99°C und einen Schmelzindex MVR 200/S von 7,4 ml/10 min. Durch eine in den Extruder angebrachte Einlaßöffnung wurden gleichzeitig 10,71 Teile der Treibmittelgemische mit der in der Tabelle 1 angegebenen Zusammensetzung kontinuierlich in den Extruder eingedrückt. Das in dem Extruder gleichmäßig geknetete Gel wurde dann nach einer Verweilzeit von 60 Minuten durch eine 300 mm breite Düse in die Atmosphäre extrudiert. Der Schaum wurde durch einen mit dem Extruder verbundenen Formkanal geführt, wobei eine geschäumte Polystyrolplatte mit einer Breite von 650 mm entstand. Der Düsenspalt sowie die Dicke und die Dichte, letztere nach DIN 53 420 bestimmt, der erhaltenen Schaumstoffplatten sind in der Tabelle 1 angegeben. Es wurde jeweils eine gleichmäßige, geschlossenzellige und formstabile Schaumstoffplatte erhalten.

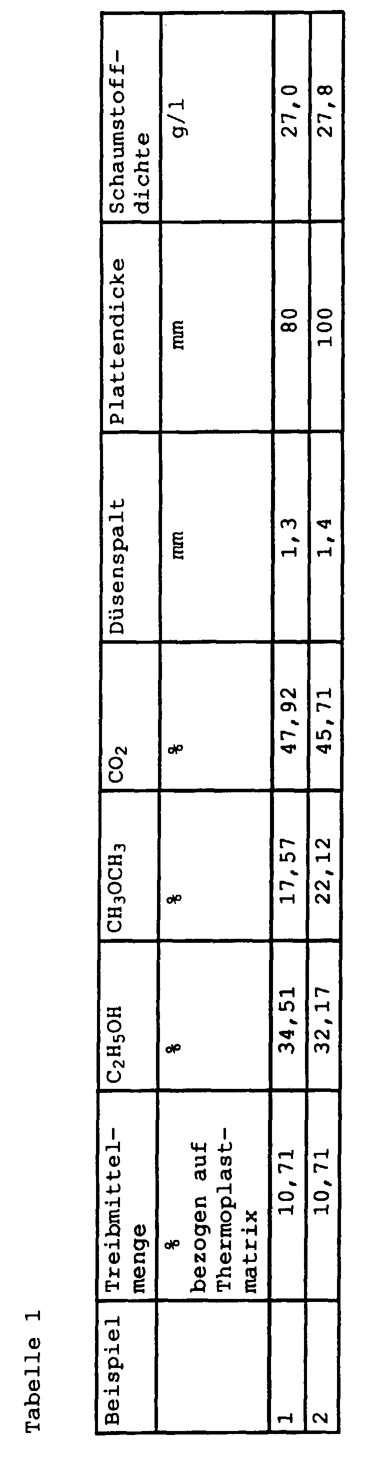

### Beispiele 3 bis 6

100 Teile eines Gemisches aus Polystyrol und 2,75 % Weißöl mit einer Vicat-Erweichungstemperatur VST B/50 von 92,3°C und einem Schmelzindex MVR 200/5 von 10,7 ml/10 min wurden in einen Extruder mit einem inneren Schneckendurchmesser von 120 mm kontinuierlich zugeführt. Gleichzeitig mit dem Polystyrolgemisch wurde Talkum (mittl. Teilchendurchmesser ca. 10 µm) wie in Tabelle 2 angegeben, in den Extruder eingeführt. Durch eine in dem Extruder angebrachte Einlaßöffnung wurde gleichzeitig ein Treibmittelgemisch mit der in Tabelle 2 angegebenen Zusammensetzung kontinuierlich in den Extruder eingedrückt. Das im Extruder gleichmäßig geknetete geschmolzene Polystyrol wurde nach einer Verweilzeit von ca. 60 Minuten durch eine 300 mm breite Düse in die Atmopshäre extrudiert. Die Düsenspaltweiten für die einzelnen Beispiele finden sich in Tabelle 2.

Zum Vergleich (Beispiel 6) wurde unter gleichen Bedingungen ein Polystyrol mit einer Vicat-Erweichungstemperatur von 101°C und einem Schmelzindex von 4,5 ml/10 min nach Beispiel 1 von EP-A 464 581 mit dem dort angegebenen Treibmittelgemisch extrudiert.

Der entstehende Schaum wurde in einen an die Düse anschließenden Formkanal geführt, wobei eine geschäumte Polystyrolplatte mit einer Breite von 670 mm entstand. Es wurde gleichmäßige, geschlossenzellige und formstabile Schaumstoffplatten erhalten. In Tabelle 2 sind die Schaumdicken und die Dichten nach DIN 53 420 angegeben.

### Beispiele 7 bis 12

100 Teile eines Gemisches aus Polystyrol und 3 % verschiedener Weichmacher (Zusammensetzung des Gemisches, Schmelzindex MVR und Vicat-Erweichungstemperatur VST, s. Tabelle 3) wurden in einen Extruder mit einem inneren Schneckendurchmesser von 53 mm kontinuierlich zugeführt. Gleichzeitig mit der Thermoplastmatrix wurden 0,63 Teile Talkum (mittl. Teilchendurchmesser ca. 10 µm) in den Extruder eingeführt. Durch eine in dem Extruder angebrachte Einlaßöffnung wurden gleichzeitig 4,25 Teile Kohlendioxid kontinuierlich in den Extruder eingedrückt. Das im Extruder gleichmäßig geknetete geschmolzene Polystyrol wurde nach einer Verweilzeit von ca. 10 Minuten durch eine 50 mm breite Düse in die Atmosphäre extrudiert. Die Düsenspaltweite betrug 2,5 mm. Der entstehende Schaum wurde in einen an die Düse anschließenden Formkanal geführt, wobei geschäumte Polystyrolbänder elliptischen Querschnitts mit Breiten von 123 bis 147 mm und Dicken zwischen 56 bis 88 mm entstanden. Es wurden gleichmäßige, geschlossenzellige und formstabile Schaumstoffkörper erhalten. In Tabelle 3 sind physikalische Kenngrößen für das jeweilige Beispiel aufgeführt (Dichte nach DIN 53 420, Querschnittsfläche des Schaumbandes).

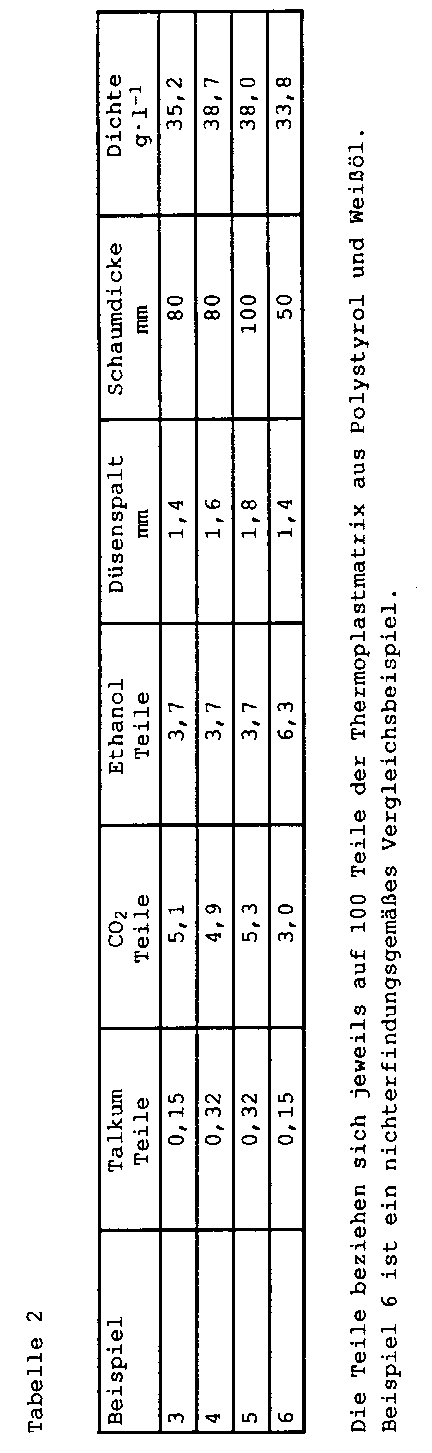

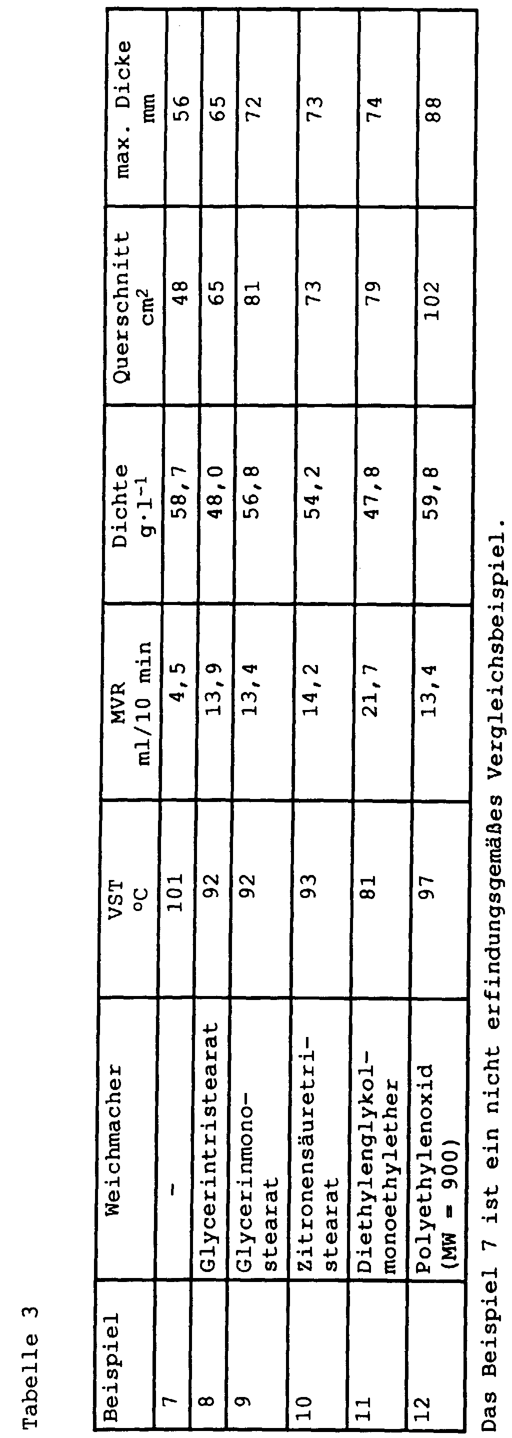

## Patentansprüche

1. Unter Verwendung halogenfreier Treibmittel hergestellte, extrudierte Schaumstoffplatten mit einer Mindestdicke von 20 mm und einem Querschnitt von mindestens 50 cm², enthaltend eine Thermoplastmatrix auf Basis eines Styrolpolymerisats, geschlossene Zellen, die frei von halogenhaltigen Gasen sind, sowie gegebenenfalls in der Thermoplastmatrix unlösliche Zusatzstoffe, dadurch gekennzeichnet, daß die Thermoplastmatrix eine Vicat-Erweichungstemperatur VST B 50 (nach DIN 53 460) von höchstens 100°C und einen Schmelzindex MVR 200/5 (nach DIN 53 735) von mindestens 5 ml/10 min aufweist.

2. Schaumstoffplatten nach Anspruch 1, dadurch gekennzeichnet, daß ihre Dicke mehr als 50 mm, vorzugsweise 80 bis 200 mm beträgt.

3. Schaumstoffplatten nach Anspruch 1, dadurch gekennzeichnet, daß mehr als 90 %, vorzugsweise mehr als 95 % ihrer Zellen geschlossen sind.

4. Schaumstoffplatten nach Anspruch 1, dadurch gekennzeichnet, daß die Thermoplastmatrix ein Styrolcopolymeres oder eine Mischung von Homopolystyrol mit einem Styrolcopolymeren ist.

5. Schaumstoffplatten nach Anspruch 4, dadurch gekennzeichnet, daß das Styrolcopolymere ein Blockcopolymerisat von Styrol und 1 bis 50 Gew.-% eines konjugierten Diens ist.

6. Schaumstoffplatten nach Anspruch 5, dadurch gekennzeichnet, daß das Blockcopolymerisat sternförmig verzweigt ist.

7. Schaumstoffplatten nach Anspruch 5, dadurch gekennzeichnet, daß das konjugierte Dien Butadien ist.

8. Schaumstoffplatten nach Anspruch 5, dadurch gekennzeichnet, daß die Thermoplastmatrix aus 50 bis 99 Gew.-% Homopolystyrol und 50 bis 1 Gew.-% Blockcopolymerisat besteht.

9. Schaumstoffplatten nach Anspruch 1, dadurch gekennzeichnet, daß die Thermoplastmatrix eine Mischung aus einem Styrolpolymerisat und 0,1 bis 10 Gew.-% eines in dem Styrol-polymerisat löslichen Weichmachers ist.

10. Schaumstoffplatten nach Anspruch 9, dadurch gekennzeichnet, daß der Weichmacher ein flüssiger Paraffin-Kohlenwasserstoff, ein organischer Ester, Ether, Säureamid oder Polyether ist.

11. Verfahren zur Herstellung der Schaumstoffplatten nach Anspruch 1 durch Extrusion eines Gemisches der plastifizierten Thermoplastmatrix mit 1 bis 15 Gew.-% eines halogenfreien Treibmittels sowie gegebenenfalls üblichen Zusatzstoffen.

12. Verfahren nach Anspruch 11, dadurch gekennzeichnet, daß als Treibmittel eine Mischung aus
| | | |
|---|---|---|
| a) | 1 bis 100 Gew.-% | Kohlendioxid, |
| b) | bis zu 95 Gew.-% | eines Ethers aus der Gruppe Dimethylether, Methylethylether und Methylvinylether, |
| c) | bis zu 60 Gew.-% | eines Alkohols oder Ketons mit einem Siedepunkt zwischen 56 und 100°C, und |
| d) | bis zu 30 Gew.-% | eines aliphatischen C₃-C₆-Kohlenwasserstoffs |
verwendet wird.

13. Verfahren nach Anspruch 11, dadurch gekennzeichnet, daß als Treibmittel eine Mischung aus
| | | |
|---|---|---|
| a) | 20 bis 95 Gew.-% | Kohlendioxid, |
| c) | 80 bis 5 Gew.-% | Ethanol und |
| d) | 0 bis 10 Gew.-% | eines aliphatischen C₃-C₆-Kohlenwasserstoffs |
verwendet wird.

14. Verfahren nach Anspruch 11, dadurch gekennzeichnet, daß als Treibmittel ausschließlich Kohlendioxid verwendet wird.

15. Verfahren nach Anspruch 11, dadurch gekennzeichnet, daß als Treibmittel eine Mischung aus
| | | |
|---|---|---|
| a) | 2 bis 90 Gew.-% | Kohlendioxid, |
| b) | 1 bis 30 Gew.-% | Dimethylether, |
| c) | 0 bis 60 Gew.-% | Ethanol, und |
| d) | bis zu 10 Gew.-% | eines aliphatischen C₃-C₆-Kohlenwasserstoffs |

## Claims

1. An extruded foam board having a minimum thickness of 20 mm and a cross section of at least 50 cm² produced using halogen-free blowing agents and comprising a thermoplastic matrix based on a styrene polymer, closed cells which are free of halogen-containing gases and, if desired, additives insoluble in the thermoplastic matrix, wherein the thermoplastic matrix has a Vicat softening temperature VST B 50 (in accordance with DIN 53 460) of at most 100°C and a melt index MFI 200/5 (in accordance with DIN 53 735) of at least 5 ml/10 min.

2. A foam board as claimed in claim 1, having a thickness of more than 50 mm, preferably from 80 to 200 mm.

3. A foam board as claimed in claim 1, wherein more than 90%, preferably more than 95%, of its cells are closed.

4. A foam board as claimed in claim 1, wherein the thermoplastic matrix is a styrene copolymer or a mixture of homopolystyrene with a styrene copolymer.

5. A foam board as claimed in claim 4, wherein the styrene copolymer is a block copolymer of styrene and from 1 to 50% by weight of a conjugated diene.

6. A foam board as claimed in claim 5, wherein the block copolymer is branched in a star-shaped manner.

7. A foam board as claimed in claim 5, wherein the conjugated diene is butadiene.

8. A foam board as claimed in claim 5, wherein the thermoplastic matrix comprises from 50 to 99% by weight of homopolystyrene and from 50 to 1% by weight of block copolymer.

9. A foam board as claimed in claim 1, wherein the thermoplastic matrix is a mixture of a styrene polymer and from 0.1 to 10% by weight of a plasticizer soluble in the styrene polymer.

10. A foam board as claimed in claim 9, wherein the plasticizer is a liquid paraffinic hydrocarbon, an organic ester, ether, acid amide or polyether.

11. A process for producing a foam board as claimed in claim 1 by extrusion of a mixture of the plasticized thermoplastic matrix with from 1 to 15% by weight of a halogen-free blowing agent and, if desired, customary additives.

12. A process as claimed in claim 11, wherein the blowing agent used is a mixture of
| | | |
|---|---|---|
| a) | from 1 to 100 % by weight | of carbon dioxide, |
| b) | up to 95 % by weight | of an ether from the group dimethyl ether, methyl ethyl ether and methyl vinyl ether, |
| c) | up to 60 % by weight | of an alcohol or ketone having a boiling point in the range from 56 to 100°C, and |
| d) | up to 30 % by weight | of an aliphatic C₃-C₆-hydrocarbon. |

13. A process as claimed in claim 11, wherein the blowing agent used is a mixture of
| | | |
|---|---|---|
| a) | from 20 to 95% by weight | of carbon dioxide, |
| c) | from 80 to 5% by weight | of ethanol and |
| d) | from 0 to 10% by weight | of an aliphatic C₃-C₆-hydrocarbon. |

14. A process as claimed in claim 11, wherein the blowing agent used is exclusively carbon dioxide.

15. A process as claimed in claim 11, wherein the blowing agent used is a mixture of
| | | |
|---|---|---|
| a) | from 2 to 90% by weight | of carbon dioxide, |
| b) | from 1 to 30% by weight | of dimethyl ether, |
| c) | from 0 to 60% by weight | of ethanol, and |
| d) | up to 10% by weight | of an aliphatic C₃-C₆-hydrocarbon. |

## Revendications

1. Panneaux en mousse extrudés, préparés en utilisant des agents moussants exempts d'halogènes, possédant une épaisseur minimale de 20 mm et une section transversale d'au moins 50 cm², contenant une matrice de matière thermoplastique à base d'un polymère de styrène, des alvéoles fermées qui sont exemptes de gaz halogénés, ainsi que, le cas échéant, des additifs insolubles dans la matrice de matière thermoplastique, caractérisés en ce que la matrice de matière thermoplastique présente une température de ramollissement de Vicat VST B 50 (selon la norme DIN 53 460) s'élevant au maximum à 100°C et un indice de fusion MVR 200/5 (selon la norme DIN 53 735) s'élevant à au moins 5 ml/10 min.

2. Panneaux en mousse selon la revendication 1, caractérisés en ce que leur épaisseur est supérieure à 50 mm, de préférence s'élève de 80 à 200 mm.

3. Panneaux en mousse selon la revendication 1, caractérisés en ce que plus de 90%, de préférence plus de 95% de leurs alvéoles sont fermées.

4. Panneaux en mousse selon la revendication 1, caractérisés en ce que la matrice de matière thermoplastique est un copolymère de styrène ou un mélange d'un homopolymère de styrène avec un copolymère de styrène.

5. Panneaux en mousse selon la revendication 4, caractérisés en ce que le copolymère de styrène est un copolymère séquencé de styrène et d'un diène conjugué à concurrence de 1 à 50% en poids.

6. Panneaux en mousse selon la revendication 5, caractérisés en ce que le copolymère séquencé est ramifié en étoile.

7. Panneaux en mousse selon la revendication 5, caractérisés en ce que le diène conjugué est le butadiène.

8. Panneaux en mousse selon la revendication 5, caractérisés en ce que la matrice de matière thermoplastique est constituée d'un homopolymère de styrène à concurrence de 50 à 99% en poids et d'un copolymère séquencé à concurrence de 50 à 1% en poids.

9. Panneaux en mousse selon la revendication 1, caractérisés en ce que la matrice de matière thermoplastique est un mélange constitué par un polymère de styrène et par un plastifiant soluble dans le polymère de styrène à concurrence de 0,1 à 10% en poids.

10. Panneaux en mousse selon la revendication 9, caractérisés en ce que le plastifiant est un hydrocarbure de paraffine liquide, un ester organique, un éther, un amide d'acide ou un polyéther.

11. Procédé pour la fabrication des panneaux en mousse selon la revendication 1, par extrusion d'un mélange de la matrice plastifiée de matière thermoplastique avec un agent moussant exempt d'halogènes à concurrence de 1 à 15% en poids et, le cas échéant, d'additifs habituels.

12. Procédé selon la revendication 11, caractérisé en ce qu'on utilise, comme agent moussant, un mélange constitué par
a) à concurrence de 1 à 100% en poids,
du dioxyde de carbone,
b) jusqu'à concurrence de 95% en poids,
un éther choisi parmi le groupe comprenant l'éther diméthylique, l'éther méthyléthylique et l'éther méthylvinylique,
c) jusqu'à concurrence de 60% en poids,
un alcool ou une cétone possédant un point d'ébullition entre 56 et 100°C, et
d) jusqu'à concurrence de 30% en poids,
un hydrocarbure aliphatique en C₃-C₆.

13. Procédé selon la revendication 11, caractérisé en ce qu'on utilise, comme agent moussant, un mélange constitué par
a) à concurrence de 20 à 95% en poids,
du dioxyde de carbone,
c) à concurrence de 80 à 5% en poids,
de l'éthanol, et
d) à concurrence de 0 à 10% en poids,
un hydrocarbure aliphatique en C₃-C₆.

14. Procédé selon la revendication 11, caractérisé en ce qu'on utilise, à titre d'agent moussant, exclusivement du dioxyde de carbone.

15. Procédé selon la revendication 11, caractérisé en ce qu'on utilise, à titre d'agent moussant, un mélange constitué par
a) à concurrence de 2 à 90% en poids,
du dioxyde de carbone,
b) à concurrence de 1 à 30% en poids,
de l'éther diméthylique,
c) à concurrence de 0 à 60% en poids,
de l'éthanol, et
d) jusqu'à concurrence de 10% en poids,
un hydrocarbure aliphatique en C₃-C₆.
